(19) **Europäisches Patentamt / European Patent Office / Office européen des brevets**

(11) **EP 1 855 284 A2**

(12) # EUROPEAN PATENT APPLICATION

(43) Date of publication:
**14.11.2007 Bulletin 2007/46**

(51) Int Cl.:
***G11B 20/12*** *(2006.01)*     ***G11B 20/18*** *(2006.01)*

(21) Application number: **07007619.5**

(22) Date of filing: **13.04.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **10.05.2006 US 746964 P**
**16.05.2006 US 747363 P**

(71) Applicant: **Nero AG**
**76307 Karlsbad (DE)**

(72) Inventors:
• **Lesser, Richard**
**76227 Karlsruhe (DE)**
• **Eckleder, Andreas**
**76316 Malsch (DE)**

(74) Representative: **Zinkler, Franz et al**
**Patentanwälte Schoppe, Zimmermann, Stöckeler & Zinkler,**
**Postfach 246**
**82043 Pullach bei München (DE)**

Remarks:
A request for correction of the drawings has been filed pursuant to Rule 88 EPC. A decision on the request will be taken during the proceedings before the Examining Division (Guidelines for Examination in the EPO, A-V, 3.).

(54) **Apparatus for writing data and redundancy data on a storage medium**

(57) Apparatus (100) for writing data and redundancy data on a storage medium (105), the storage medium (105) having a defined geometrical structure, the apparatus (100) comprises a writer for writing data and redundancy data onto the storage medium (105) such that a geometrical distance between the data and the redundancy data is larger than a predefined distance, and for generating and writing redundancy location data identifying a location of the redundancy data on the storage medium (105).

FIG 1

EP 1 855 284 A2

**Description**

The present invention is in the field of data protection and security, respectively, in the field of data safety and data verification.

Data safety and data security is a known problem, and widely combat through large numbers of data backups. In order to secure data, a common method is to backup data on a regular time basis and to store different backups in different locations. However, when referring to data carriers as, for example, a CD (CD = Compact Disk) or a DVD (DVD = Digital Versatile Disk), they are often only available as a single copy, i.e. a user would usually only buy a single piece. When purchasing a CD having any kind of data, it is very unfortunate when data gets lost, either through time or through physical force as, for example, scratches on the surface of the a CD. With conventional copy protection mechanisms, it is not always possible to make private backups as vendors try to prevent product piracy.

Vendors of digital media often copy protect the media, which they offer their products on. This complicates data protection for a user or customer only having a single copy at their disposal, which can be very sensitive to physical impacts. Often data carriers react with data loss or data degradation if for instance scratches occur on a CD or DVD. Vendors of digital media may therefore be in a conflict between preventing product piracy and maintaining user satisfaction.

It is the object of the present invention to provide a more reliable apparatus for storing data on a storage medium.

The object is achieved by an apparatus for writing, according to claim 1, a method for writing according to claim 9, an apparatus for reading according to claim 11, a method for reading according to claim 18, and an optical disc drive according to claim 20.

The object is achieved by an apparatus for writing data and redundancy data on a storage medium, the storage medium having a defined geometrical structure, comprising a writer for writing data and redundancy data onto the storage medium such that a geometrical distance between the data and the redundancy data is larger than a predefined distance, and for generating and writing redundancy location data identifying a location of the redundancy data on the storage medium.

The object is further achieved by an apparatus for reading a data set from a storage medium, which comprises a means for reading control information from the storage medium, the control information having information on the location of redundancy data on the storage medium and a means for reading data from the storage medium and for indicating, if a subset of the data was read incorrectly. The apparatus further comprises a means for reading redundancy data based on the information on the location of the redundancy data in response to the indication of the subset of data having been read incorrectly. The apparatus further comprises a means for combining the data and the redundancy data to obtain the data set.

The present invention is based on the finding, that enhanced data security and reliability can be obtained, by taking into account geometrical properties of a storage medium. In one embodiment, data and redundancy data is written to an optical disc. If data and redundancy data are written close to each other, i.e. without having a geometrical gap in between on e.g. an optical disc, it is likely that if a physical disruption occurs, for example through a scratch that redundancy data and data are affected. According to embodiments of the present invention, a minimum geometrical distance is achieved between data and redundancy on when written for example on an optical disc.

Embodiments therewith reduce the risk of permanent data loss by using an optimizing function assigning each sector on a disc to a certain redundancy group. A redundancy group is a group of data blocks or data segments, in which a certain number of members of the group can be lost, without losing the data content. The assignment of sectors on a disc is chosen such that the probability of two or more sectors belonging to the same redundancy group to be defective is minimized, according to one embodiment. This, can for example be achieved by evaluating the probabilities of other data blocks to be damaged, depending on their geometrical position on the disc, if a certain datablock is known to be damaged.

For example, scratches will cause every n-th data block to be damaged where n is a value that needs to be determined from the physical specifications of a disc. Due to bad media quality, a certain spot with a given diameter on a disc may not have been written correctly. So all datablocks located within a certain diameter from a datablock are known to be defective and are therefore not be part of the same redundancy group in some embodiments. Other optimization functions are also conceivable, in an embodiment it may be made sure that data and associated redundancy data is geometrically separated on a storage medium. Moreover, embodiments provide control information, for example in terms of a directory describing the assignment of each datablock to a certain redundancy group, which will also be written or stored on the storage medium, e.g. on a disc. In another embodiment, an assignment function can be identified by a reader, e.g. by an identifier also stored on the storage medium, or a reader could determine redundancy blocks available from the storage medium by scanning the storage medium for redundancy data and identify the geometrical locations of the redundancy datablocks.

Embodiments of the present invention will be described in detail in the following using the accompanying figures, in which

Fig. 1       shows an embodiment of a storage medium;

Fig. 2a      shows an embodiment of an apparatus for reading;

Fig. 2b      shows another embodiment of an apparatus for reading;

Fig. 3       shows an embodiment of a storage medium;

Fig. 4       shows an embodiment of an anchor structure;

Fig. 5       shows an embodiment of a file fragment information table structure;

Fig. 6       shows an embodiment of a file fragment information table entry;

Fig. 7       shows an embodiment of a definition of a copy protection field;

Fig. 8       shows an embodiment of a disc security information structure;

Fig. 9       shows an embodiment of a redundancy information field structure; and

Fig. 10      shows an embodiment of a redundancy map information structure.

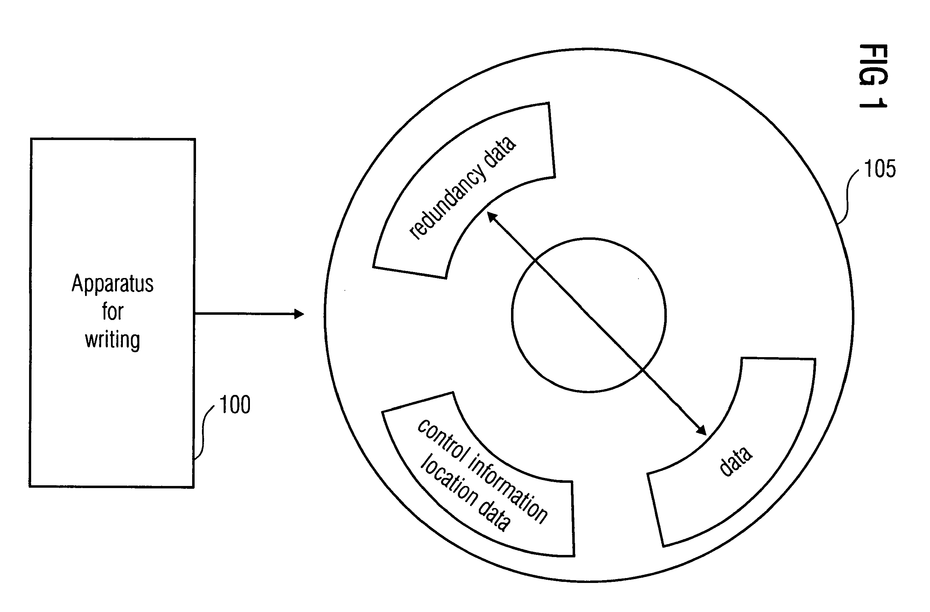

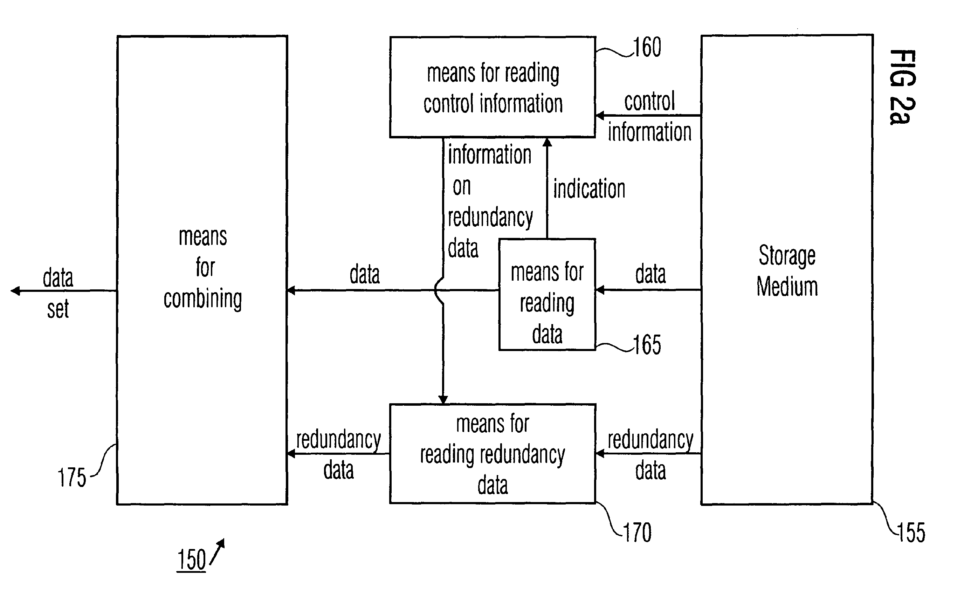

Fig. 1 shows an apparatus 100 for writing data and redundancy data on a storage medium 105. The storage medium 105 has a defined geometrical structure, the embodiment in Fig. 1 shows, for example, an optical disc as a CD, DVD or blue ray disc. The apparatus 100 comprises a writer for writing data and redundancy data onto the storage medium 105, such that a geometrical distance between the data and the redundancy data is larger than a predefined distance, and for generating and writing redundancy location data or control information identifying a location of the redundancy data on the storage medium 105.

In another embodiment the writer may be adapted for writing the data such that a baseline reader and an enhanced reader can read the data and for writing the redundancy data such that the enhanced reader can read and process the redundancy data and the baseline reader can ignore, skip or not read the redundancy data.

In embodiments the predefined geometrical distance may be less than, for example, 5 cm, 1 cm or 1 mm. The writer may be adapted for using optical storage media, however in another embodiment, the writer may be adapted for using magnetic or opto-magnetic media. The writer may be adapted for distributing the data and the redundancy data segments evenly on the geometrical surface of an optical disc.

Moreover, in another embodiment the writer may be adapted for providing redundancy location data in terms of a table having logical sector numbers of the data or the redundancy data. The writer may also be adapted for writing the data and the redundancy data according to a sorting scheme, which may be adapted to the geometrical structure of the storage medium 105. The writer may write the data and redundancy data in one session, i.e. composing a complete data stream fitting the storage medium 105. A sorting scheme may then arrange the data and redundancy data, as well as the location data within the data stream in a way, such that the geometrical distance between redundancy data and data on the storage medium 105 is larger than the predefined distance.

In another embodiment the sorting scheme can be optimized such that a probability of data and redundancy data being stored in a defective sector on the storage medium 105 is lower than if data and redundancy data were stored in adjacent sectors.

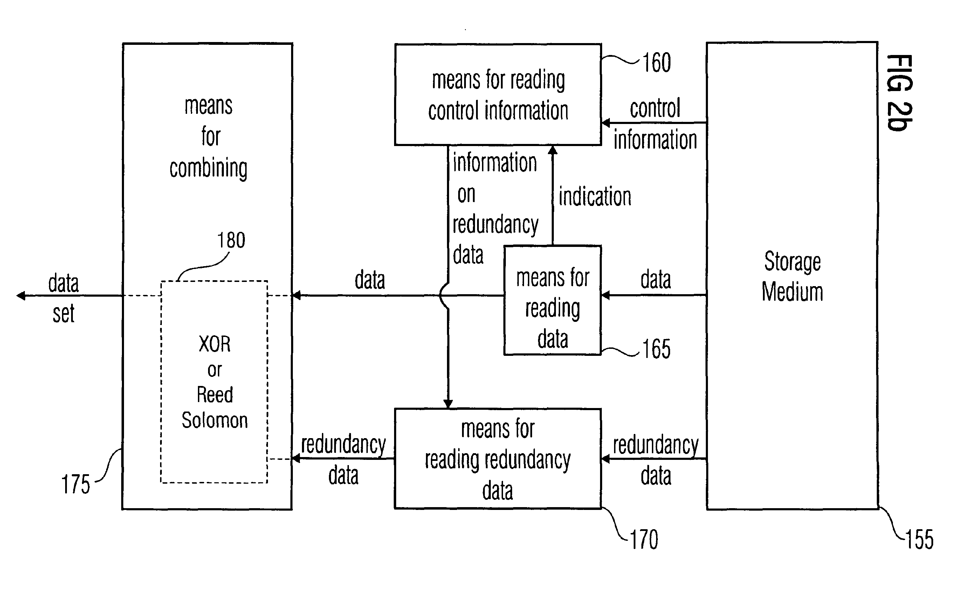

Fig. 2a shows an embodiment of an apparatus 150 for reading a data set from a storage medium 155. The apparatus 150 comprises a means 160 for reading control information from the storage medium 155, the control information having information on redundancy data on the storage medium 155. Furthermore, the apparatus 150 comprises a means 165 for reading data from the storage medium 155 and for indicating if a subset of the data has been read incorrectly. Furthermore, the apparatus 150 comprises a means 170 for reading redundancy data based on the information on the redundancy data in response to the indication of the subset of data having been read incorrectly and a means 175 for combining the data and the redundancy data to obtain the data sets.

In one embodiment, the means 160 for reading control information is adapted for reading a table from the storage medium 155, the table having information on an amount of redundancy data or a location of redundancy data on the storage medium 155. In another embodiment, the means 160 for reading control information is adapted for reading control information in terms of a logical sector number of redundancy data on the storage medium. In another embodiment, the means 165 for indicating if a subset of data was read incorrectly is adapted for determining a checksum or for performing a CRC (CRC = Cyclic Redundancy Check) on the data read as indicated in Fig. 2b. Fig. 2b shows another embodiment of an apparatus 150 for reading a data set from a storage medium 155, comprising the same components as detailed for the embodiment in Fig. 2a.

In yet another embodiment, the means 170 for reading the redundancy data may be adapted for reading redundancy data for which data subsets have been read incorrectly from a location on which information is comprised in the control information. The means 175 for combining can be adapted for combining the redundancy data and the data according to an XOR or Reed Solomon combiner 180, as shown in Fig. 2b.

According to another embodiment an optical disc drive may comprise an apparatus for writing and an apparatus for reading according to the above embodiments.

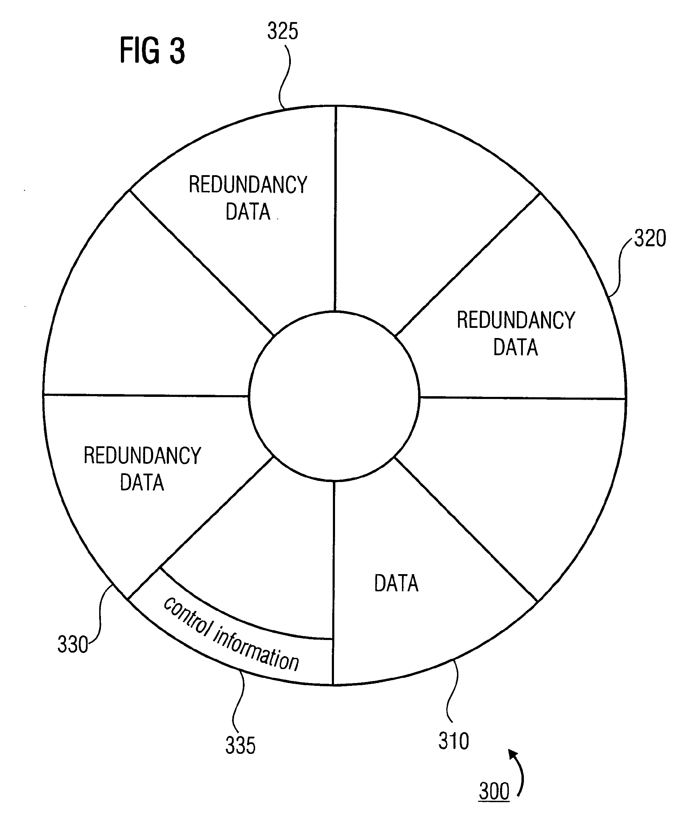

Fig. 3 shows a storage medium 300, which is exemplified as an optical disc. The optical disc 300 comprises data 310 and redundancy data 320, 325 and 330. Fig. 3 illustrates that extra redundancy data 320, 325 and 330 can be used to enhance data reliability. If, due to any physical destruction the data section 310 of the disc 300 can no longer be read, there are still the three redundancy data sections 320, 325 and 330, of which a single one would be enough in order to restore the data. In one embodiment the storage medium 300 may further comprise control information 335, which has information on the location or amount of redundancy data on the storage medium 300, e.g. in terms of logical sector numbers (LSN = Logical Sector Number).

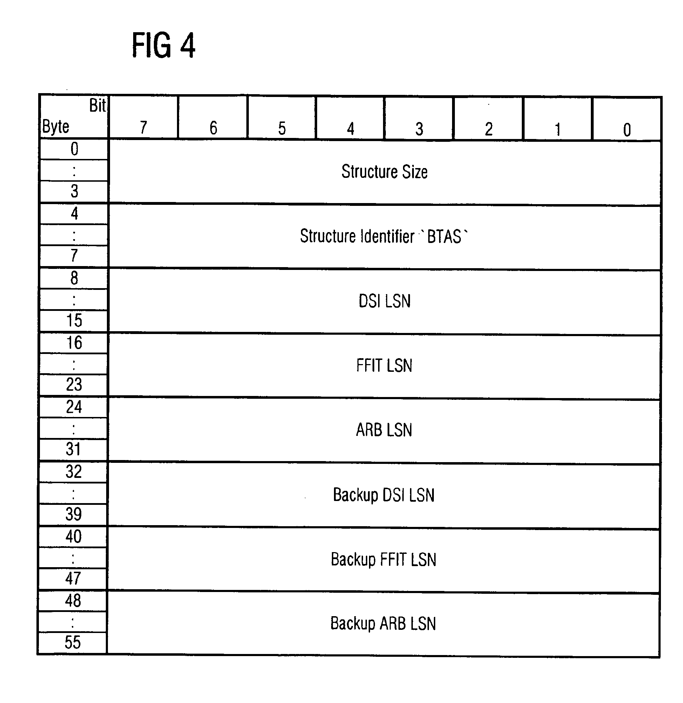

Fig. 4 shows a basic SecurDisc technology anchor structure (BTAS = Basic SecurDisc Technology Anchor Structure). The BTAS can e.g. be located in RLSN 15 (RLSN = Relative Logical Sector Number), relative to the beginning of a SecurDisc enabled recording session at offset RBP 64 (RBP = Relative Byte Position). Moreover, one redundant copy of BTAS can be located at either the last LSN of a SecurDisc enabled recording session, or the logical sector immediately preceding the secondary AVDP (AVDP = Anchor Volume Description Pointer). The BTAS references an FFIT (FFIT = File Fragment Information Table) and a redundancy information block, as well as a second redundancy backup copy of each of these structures, and thus serves as an anchor for all SecurDisc structures located in the user data area. Fig. 4 shows an embodiment of an exemplified BTAS.

Fig. 4 shows a field for the structure size which specifies the total size of the structure in bytes as a Big-Endian value, which can for example always be 56-bytes. Moreover, Fig. 4 shows a structure identifier "BTAS", which contains an ASCII (ASCII = American Standard Code for Information Interchange) representation of "BTAS" identifying the structure as a SecurDisc technology anchor structure.

The field DSILSN (DSI = Disc Security Information) specifies the logical sector number of the disc security information structure as a Big-Endian value. If this security information is not present, all bytes of this field are set to zero. Furthermore, Fig. 4 shows the FFITLSN, which specifies the logical sector number of the FFIT as a 64-bit Big-Endian value.

Another field shown in Fig. 4 is the ARBLSN (ARB = Application Revocation Lock) and specifies the logical sector number of ARB as a 64-bit Big-Endian value, or a field filled with zeros, if no ARB is present. The ARB is required in the embodiments for all media that use copy protection or pass phrase protection features of SecurDisc. An ARB is a revocation block, which can be used to revoke compromised applications.

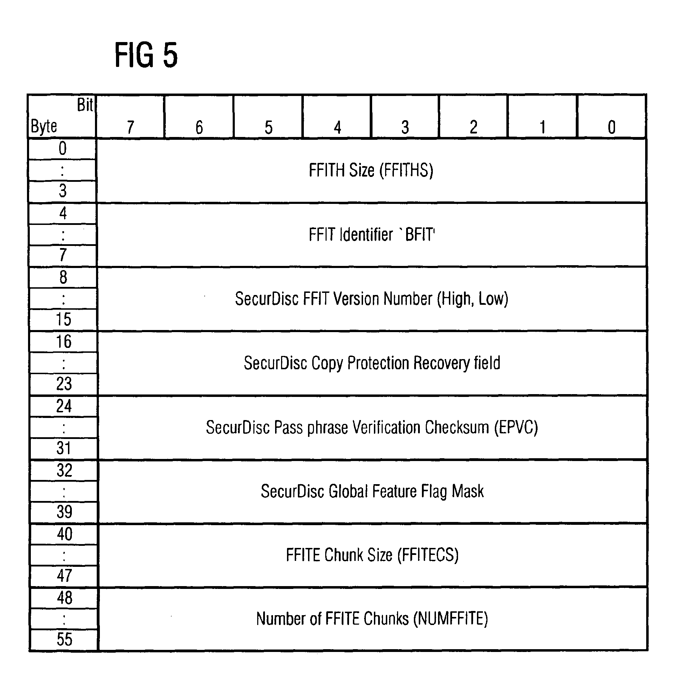

Fig. 4 further shows a "Backup DSILSN"-, a "Backup FFITLSN"- and a "Backup ARBLSN"-field, which specify the logical sector numbers of the respective backup structures. The FFIT contains information about each contiguous area of the disc that is managed by SecurDisc, such contiguous areas may include files that are copy protected or pass phrase protected, as well as files protected by checksums. The FFIT is stored after all other files on the disc, to allow checksums to be generated on-the-fly during the recording process. The location of the FFIT is flexible, the FFIT is referenced by the BTAS. It begins with a header and an embodiment of a structure is shown in Fig. 5.

Header information is comprised in the FFITH (FFITH = FFIT Header)-field containing version information and a field indicating the different SecurDisc features that are used on any part of the media. A backup of the FFIT is referenced by the BTAS as mentioned above. Its location may be freely selected. However, to achieve maximum reliability, the backup FFIT should be physically distant from the first copy of the FFIT, as a minimum requirement, the backup FFIT can be stored in a packet different to the primary FFIT.

As indicated in Fig. 5, the structure starts with the "FFITH Size"-field (FFITHS = FFITH size), which specifies the total size of the FFITH and bytes as a Big-Endian value. In one embodiment the structure size may always be 40bytes. Moreover, Fig. 5 shows the FFIT identifier, which contains a ASCII representation of the string "BFIT" identifying the structure as a SecurDisc file fragment information table.

Moreover, Fig. 5 shows a SecurDisc FFIT version number, which specifies a version number of the structure. The first byte contains a high version number the second byte contains a low version number. The high version number is 01h in one embodiment. An implementation may only rely on the layout of the remaining information of the FFITH and its FFITE (FFITE = FFIT Entry) if the high version number is 01h. If only the low version number is higher than the version number an implementation supports, the implementation may still rely on the structures that have been defined in a previous version of an embodiment.

Furthermore, Fig. 5 shows a "SecurDisc Copy Protection Recovery"-field, which comprises the 128-bit disc unique ID encrypted with a 128-bit AES key value derived from a special copy protection recovery pass phase calculated as described above. There may be no pass phrase verification checksum for this value in another embodiment. If no copy protection recovery pass phrase has been specified during the authoring process all bytes of this field may be set to zero.

Moreover, Fig. 5 shows a SecurDisc pass phrase verification checksum, which comprises an 128-bit checksum that can be used to verify the correctness of the pass phrase entered by a user. The pass phrase verification checksum has a fixed value PVC, which can be encrypted using the key contribution derived from the user pass phrase, as it was described above.

Furthermore, there is a SecurDisc global feature flag mask in Fig. 5 comprising the result of an XOR operation, combining all feature flag masks of all FFITE of this FFIT. Fig. 5 also shows an FFITE chunk size, which is a 32-bit Big-Endian value in this embodiment, and all FFITE may be stored as a chunked information list with a fixed chunk size. At the bottom of the structure shown in Fig. 5 there is a number of FFITE chunks, which specifies the number of FFITE chunks contained in the file fragment information table as a 64-bit Big-Endian value. The chunk list of FFITE starts immediately after the FFITH, as depicted in Fig. 5.

The FFITH may grow as additional fields are added in further embodiments. The location of the FFITE can be calculated as

$$\mathtt{FFITEOFFSET[0] = FFITLSN * BPS \qquad + FFITHS}$$

$$\mathtt{FFITELSN[0] \quad = FFITEOFFSET[0] \qquad DIV \quad BPS}$$

$$\mathtt{FFITERBP[0] \quad = FFITEOFFSET[0] \qquad MOD \quad BPS}$$

with FFITEOFFSET[0] being the relative bit position (RBP = Relative Bit Position) of the first FFITE relative to the beginning of the user data area of the disc, BPS is the number of bytes per sector and FFITELSN is the LSN of the FFIT.

The result of this operation is FFITELSN[0], the LSN of the first FFITE and FFITERBP[0], the relative byte position of the first FFITE from the beginning of the sector specified by the FFITELSN[0].

FFITE are stored in ascending order of their fragments' LSN. The location of a particular entry x is calculated as

$$\mathtt{FFITEOFFSET[x] \quad = FFITEOFFSET[0] \; + \quad x * FFITECS}$$

$$\mathtt{FFITELSN[x] \qquad = FFITEOFFSET[x] \quad DIV \quad BPS}$$

$$\mathtt{FFITERBP[x] \qquad = FFITEOFFSET[x] \quad MOD \quad BPS \; ,}$$

where FFITEOFFSET[x] is the RBP of the x-th FFITE relative to the beginning of the user data area of the disc, x is a number between 0 and NUMFFITE-1 and FFITECS is the FFITE content size.

The result of this operation is FFITELSN[x], the LSN of the x-th FFITE and FITERBP[x], the relative byte of the x-th FFITE from the beginning of the sector specified by FFITELSN[x].

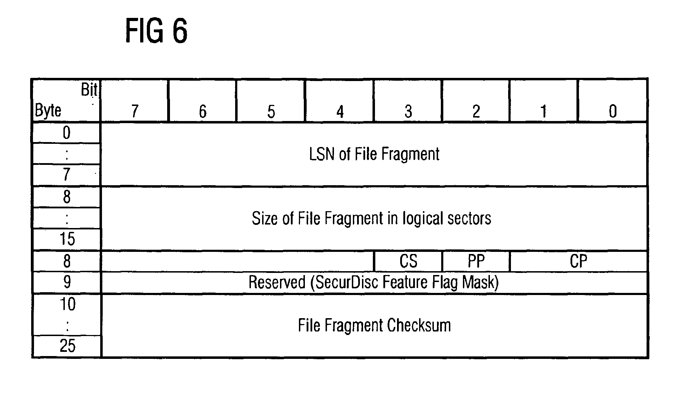

An embodiment of an FFITE structure is shown in Fig. 6. Fig. 6 shows an "LSN of File Fragment"-field, which specifies the LSN of the file fragment managed by the FFITE. Moreover, a field is dedicated to the size of the file fragment in logical sectors, specifying the size of the file fragment managed by the FFITE in logical sectors. A logical sector is the smallest logical unit for SecurDisc. If a sector is not used completely, the remaining space can be filled with zeros in this embodiment.

A pass phrase protected field "PP" comprises a flag, also being part of the SecurDisc feature flag mask. If true, the file fragment managed by this FFIT is pass phrase protected. The "CS"-field is also part of the SecurDisc feature flag mask. If true, the content of the file fragment managed by this FFITE can be verified using the "File Fragment Checksum"-field stored in this FFITE.

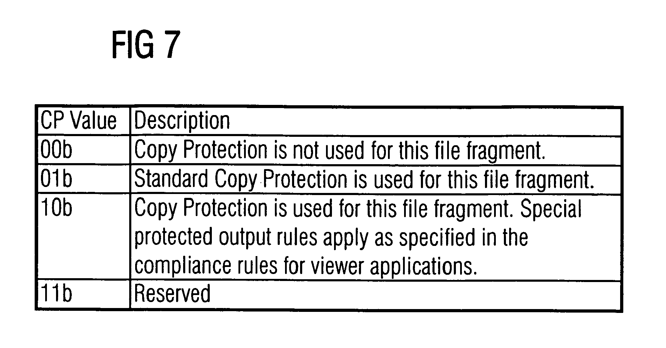

The "CP"-field is part of the SecurDisc feature flag mask. It can assume four distinct conditions regarding copy protection for the file fragment managed by this FFITE as specified in the Table in Fig. 7. Fig. 7 shows an embodiment of the copy protection values, indicating whether copy protection is used or not for this file fragment, and whether special protected output rules apply.

Fig. 6 further shows the file fragment checksum in case the CS flag is true, this field may contain a AES-128 cryptographic hash of the file fragment managed by this FFITE. If the CS flag is false, this field may contain all zeros. Moreover, Fig. 6 shows in row 6, a space that can be reserved for SecurDisc feature flag mask extensions.

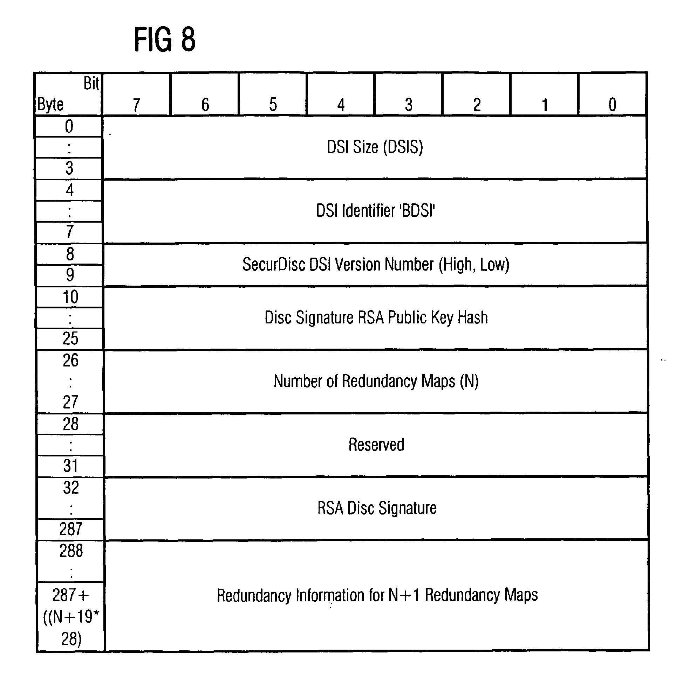

Fig. 8 shows an embodiment of a disc security information structure (DSI = Disc Security Information). The disc security information structure stores global information about disc security. It is stored after all other files on the disc to allow digital signatures to be generated on-the-fly. The location of the DSI may be referenced by the BTAS as mentioned above. The DSI can be stored in a contiguous area of the disc.

Moreover, a backup DSI may be referenced by the BTAS in an embodiment. Its location may be freely selected. However, to achieve maximum reliability, the backup DSI should be physically distant from the first DSI copy. As a minimum requirement, the backup DSI should be stored in a different packet than the primary DSI in an embodiment.

If the backup DSI is located on a disc before the primary DSI, a "RSA Disc Signature"-field of the backup DSI may be assumed to have all its bits set to zero when calculating the digital signature in this embodiment (RSA = Initials of Surnames of Inventors, Rivest, Shamir and Adleman). Moreover, the DSI structure may store up to 65535 redundancy map references in embodiments. This allows for a very fine-grained configuration of redundancy mapping.

Fig. 8 shows an embodiment of a DSI structure. The "DSI Size"-field specifies the size of the structure in bytes, as a Big-Endian value. In this embodiment, the size is 120+(N+1)x1Ch. The DSI identifier can be a 4 byte identifier, identifying the structure as a DSI structure. This identifier may contain the ASCII representation of "BDSI".

In an embodiment a SecurDisc DSI version number specifies the version number of the structure. The first byte may contain the higher version number and the second byte may contain the lower version number in this embodiment. The higher version number may be 01h for this embodiment, the low version number may be 00h. An implementation may only rely on the layout of the remaining information of DSI if the higher version number is 01h. If only the low version number is higher than the version number the implementation supports, the implementation may still rely on the structures that have been defined in a previous version.

The number of redundancy maps N specifies the number of redundancy maps referenced by the structure as a 16-bit Big-Endian value. The minimum number of redundancy maps may be 1 in an embodiment, so the actual number of redundancy maps can be N+1. As mentioned above, in the "Reserved"-field, all bytes may be set to zero.

A "Disc Signature RSA Public Key Hash"-field may contain a 128-bit AES hash value of the public key that can be used for signature verification. It may be used by an implementation to check whether the correct public key has been supplied by the user to verify the authenticity of the disc. If the disc is not digitally signed, all bits of the field may be set to zero.

A "RSA Disc Signature"-field may contain a 256-bit RSASSA-PSS digital signature (PSS = Probabilistic Signature Scheme). If the disc is not digitally signed, all bytes of this field are set to zero. An SHA-1 (SHA = Secure Hash Algorithm) hash value generated for the digital signature contains all data starting from the beginning of the session until the last byte before the "RSA Disc Signature"-field of the primary DSI. If the area covered by the SHA-1 hash includes the backup DSI structure, the structure can be included in the hash with its "RSA Disc Signature"-field set to all zeros.

The redundancy information contains information about redundancy maps on the SecurDisc media. It is used when data is stored redundantly to allow recovery from fatal read errors, and corresponds to control information, specifying location and presence of redundancy data, according to an embodiment.

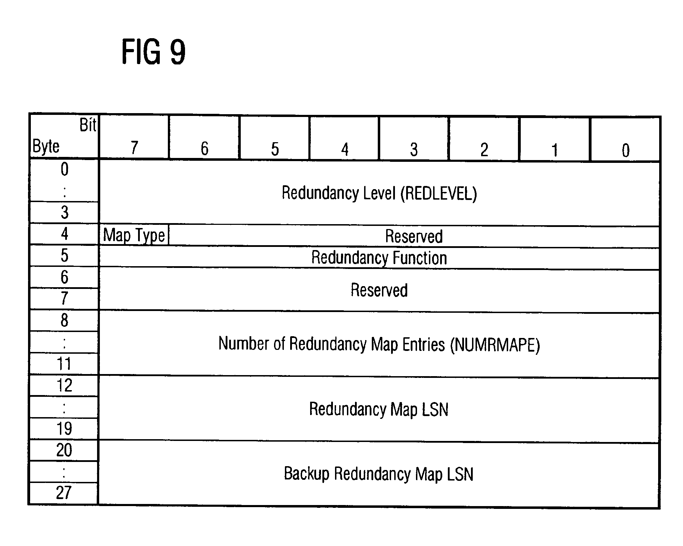

A more detailed embodiment of a redundancy information structure is shown in Fig. 9. The structure shown in Fig. 9 may repeat N+1 times, so one entry can be present for each redundancy map defined in the DSI structure explained above. If the "Map Type"-field is set to false, the "Redundancy Level"-field specifies how many packets may form a redundancy group. The value may be in the range from 1 through $(2^{32}-1)$ with 1 being the highest security level. If the "Map Type"-field is set to true, the redundancy level may specify how many redundancy packets are written for a single user data packet. The value can be in the range from 1 to $(2^{32}-1)$ with $2^{32}-1$ being the highest security level. In one embodiment setting this field to zero may serve as switching off the enhanced data security feature.

The "Map Type"-field may specify the type of mapping between redundancy packets and user data packets, i.e. between data and redundancy data. If this bit is set to true, the mapping between user data packets and redundancy packets may be 1:N. This means that for a single user data packet, at least one redundancy packet exists. The exact number may be specified by a "Redundancy Level"-field. If the bit is set to false, the mapping between user data packets and redundancy packets may be N:1. This means that at least one user data packet may be mapped to a single redundancy packet. The exact number of user data packets mapped to a single redundancy packet may be specified by the "Redundancy Level"-field. In the "Reserved"-field, all bits are set to zero as mentioned above.

A "Redundancy Function"-field can specify the redundancy function used. In one embodiment, a value of 00h may indicate that enhanced data security is not used. For example, a value of 01h may indicate that an XOR redundancy grouping scheme is used. In this scheme, two data packets are processed using an XOR operation, of which a redundancy packet results. Any two of the then three packets allow to restore the two data packets. The "Redundancy Function"-field may specify other redundancy functions as, for example, the usage of Reed Solomon encoding, a convolutional coding scheme or even enable the usage of turbo codes.

A "Number of Redundancy Map Entries"-field may specify the number of redundancy map entries as a Big-Endian DWORD value. The "Redundancy Map LSN"-field specifies the LSN of the redundancy map as a Big-Endian 64-bit value or zero if the enhanced data security feature is not used. A "Backup Redundancy Map LSN"-field may specify the LSN of the backup redundancy map as a Big-Endian 64-bit value or zero, when the feature is not used.

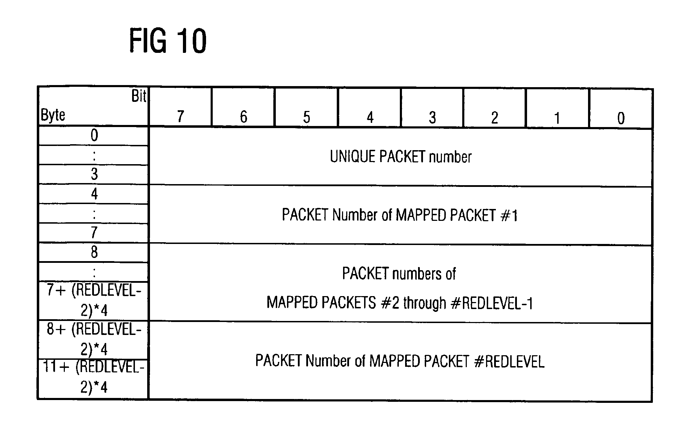

The redundancy map information structure provides a 1:N or N:1 mapping between user data packets and redundancy packets. Which mapping mode is in use for a particular disc may be determined by the "Map Type"-field specified in the "Redundancy Information"-field of the DSI structure. If the "Map Type"-field is set to false, a unique packet corresponds to a redundancy packet and a mapped packet corresponds to a user data packet according to the structure depicted in Fig. 10. If the "Map Type"-field is set to true, a unique packet corresponds to a user data packet and a mapped packet corresponds to a redundancy packet in Fig. 10. Therewith, different code rates are enabled, which are literally 1:N, respectively N:1. The redundancy map comprises entries according to the structure depicted in Fig. 10. Redundancy map entries are sorted in ascending order of their unique packet number in this embodiment.

A backup of the redundancy map information is referenced by the DSI structure. Its location may be freely selected. However, to achieve maximum reliability, the backup redundancy map should by physically distant from the first copy. As a minimum requirement, the backup redundancy should be stored in a different packet than the primary in an embodiment.

In Fig. 10, a "Unique Packet Number"-field may specify a packet number of the unique packet with the meaning specified above. The packet number of a "Mapped Packet#N"-field may specify a REDLEVEL entry following the unique packet number. They specify the mapped packets with the meaning specified above.

Embodiments of the present invention provide increased data security to a user. In one embodiment, even if a disc is partially destroyed, the user is able to retrieve his data. If the data stored on the disc is defective, a user can also be notified so that no work is carried out with broken data accidentally.

Embodiments take advantage of, for example, optical media not being completely written when used for transferring data from one person to another. Capacity overhead of media is used by embodiments to redundantly store data that has been written to the media. If parts of e.g. a disc are damaged, the data can be reconstructed from the redundant information stored in the otherwise unused areas of the disc. This is also true for backups where the user is able to trade in reliability for capacity.

According to one detailed embodiment of the present invention, data blocks, or data segments are grouped into redundancy groups. The content of all data blocks belonging to the same redundancy group is combined in a manner that allows restoring one or more members of the same redundancy group from the remaining entries. A very simple but effective approach in an embodiment is an XOR redundancy group in which all data blocks belonging to the same redundancy group are combined using a bit-wise XOR and the result is stored into one extra redundancy data block. If no more than one single data block from a given redundancy group fails, it can be reconstructed from the original data of the remaining group members and the redundancy information stored in the otherwise unused area of the disc.

A more sophisticated method of combining the members of the redundancy group is to use Reed Solomon checksums or codes, which allow for more than a single data block within a group to be restored.

Moreover, in embodiments, the number of data blocks belonging to the same redundancy group determines the security level of the content. The more data blocks belong to the same group, the greater the risk of permanent loss of the data through media damage.

If both the "Redundancy Level"- and the "Redundancy Function"-fields of the DSI structure are set to a value different from zero for the first redundancy map entry, some of the media space may be used to provide redundant storage of user payloads.

Using the redundancy maps referenced through the "Redundancy Information"-field of the DSI structure, a host can restore lost information with a redundancy group by extracting it from the information stored in the same group which is still intact.

In some embodiments a redundancy group can be defined as a group of datablocks, for example ECC blocks (ECC = Error Tracking and Correction), that share a common hash ECC block. The hash ECC block content may be calculated from the ECC block belonging to the same redundancy groups through a redundancy function. In some embodiments a redundancy function supported is XOR.

An embodiment of an apparatus for writing may be free to choose the best strategy to combine ECC blocks to redundancy groups, taking into account optical media properties and other criteria to ensure that no more than a single ECC block within a redundancy group is affected if the media gets damaged.

The redundancy level determines separately for each redundancy map, how many ECC blocks are assigned to a single redundancy group, thus determining the level of safety that should be accomplished. The more ECC blocks are assigned to the same ECC group, the more likely a defection of two or more ECC block, which constitutes a situation in which restoring the defective ECC blocks becomes impossible with e.g. the XOR redundancy function.

To restore a defective ECC block, a reader can for example read the information stored in the DSI structure and find the corresponding entry in the redundancy map and read all other packets that belong to the same redundancy group, i.e. read the corresponding redundancy packets, and calculate the restored content of the defective ECC block as follows:

$$\mathtt{RESTORED\_PACKET = PACKET\#1 \ XOR \ PACKET\#2 \ XOR \ [...] \ XOR}$$

$$\mathtt{PACKET\#REDLEVEL-1 \ XOR \ RPACK}$$

where RESTORED_PACKET is the content of the restored packet, PACKET#x is the content of packet x, REDLEVEL is the number of packets pre redundancy group and RPACK is the content of the redundancy packet.

If a packet could not be restored using the first redundancy map, the reader implementation may repeat this process with all remaining redundancy maps until the packet could be restored.

Depending on certain implementation requirements of the inventive methods, the inventive methods can be implemented in hardware or in software. The implementation can be performed using a digital storage medium, in particular, a disc, DVD or a CD having an electronically readable control signals stored thereon, which co-operate with a programmable computer system, such that the inventive methods are performed. Generally, the present invention is, therefore, a computer program product with a program code stored on a machine-readable carrier, the program code being operated for performing the inventive methods when the computer program product runs on a computer. In other words, the inventive methods are, therefore, a computer program having a program code for performing at least one of the inventive methods when the computer program runs on a computer.

## LIST OF REFERENCE SIGNS

| | |
|---|---|
| 100 | Apparatus for Writing |
| 105 | Storage Medium |
| 150 | Apparatus for Reading |
| 155 | Storage medium |
| 160 | Means for Reading Control Information |
| 165 | Means for Reading Data |
| 170 | Means for Reading Redundancy Data |
| 175 | Means for Combining |
| 180 | XOR or Reed Solomon Combiner |
| | |
| 300 | Storage Medium |
| 310 | Data |
| 320 | Redundancy Data |
| 325 | Redundancy Data |
| 330 | Redundancy Data |

## Claims

1. Apparatus (100) for writing data and redundancy data to a storage medium (105), the storage medium (105) having a defined geometrical structure, comprising:

   a writer for writing data and redundancy data onto the storage medium (105) such that a geometrical distance between the data and the redundancy data is larger than a predefined distance, and for generating and writing redundancy location data identifying a location of the redundancy data on the storage medium (105).

**2.** Appratus (100) of claim 1, wherein the writer is adapted for writing the data such that a baseline reader and an enhanced reader can read the data and for writing the redundancy data such that the enhanced reader can read and process the redundancy data and the baseline reader ignores, skips or does not read the redundancy data.

**3.** Apparatus (100) of one of the preceding claims, wherein the predefined geometrical distance is less than 5cm, 1cm or 1mm.

**4.** Apparatus (100) of one of the preceding claims, wherein the writer is adapted for using an optical disc as a storage medium (105).

**5.** Apparatus (100) of claim 4, wherein the writer is adapted for distributing the data and the redundancy data in data segments evenly on the geometrical surface of the optical disc.

**6.** Apparatus (100) of one of the preceding claims, wherein the writer is adapted for writing redundancy location data in terms of a table having logical sector numbers of the data or the redundancy data.

**7.** Apparatus (100) of one of the preceding claims, wherein the writer is adapted for writing data and redundancy data according to a sorting scheme, which is adapted to a geometrical structure of the storage medium.

**8.** Apparatus (100) of claim 7, wherein the sorting scheme is optimized such that the probability of data and redundancy data being stored in defective sectors on the storage medium (105) is lower than if data and redundancy data were stored in adjacent sectors.

**9.** Method for writing data and redundancy data on a storage medium, the storage medium having a defined geometrical structure, comprising the steps of:

writing data and redundancy data onto the storage medium such that a geometrical distance between the data and the redundancy data is larger than a predefined distance; and
generating and writing redundancy location data identifying a location of the redundancy data on the storage medium.

**10.** Computer program having a program code for performing the method according to claim 9 when the program code runs on a computer.

**11.** Apparatus (150) for reading a data set from the storage medium (155), comprising a means (160) for reading control information from the storage medium (155), the control information having information on redundancy data on the storage medium (155);
a means (165) for reading data from the storage medium (155) and for indicating if a subset of the data was read incorrectly;
a means (170) for reading redundancy data based on the information on a redundancy data in response to the indication of the subset of data having been read incorrectly; and
a means (175) for combining the data and the redundancy data to obtain the data set.

**12.** Apparatus (150) of claim 11, wherein the means (160) for reading control information is adapted for reading a table from the storage medium (155), the table having information on an amount of redundancy data or a location of redundancy data on the storage medium (155).

**13.** Apparatus (150) of claims 11 or 12, wherein the means (160) for reading control information is adapted for reading control information in terms of logical sector numbers of redundancy data on the storage medium (155).

**14.** Apparatus (150) of one of the claims 11 to 13, wherein the means (165) for indicating if a subset of data was read incorrectly is adapted for determining a checksum or performing a CRC-check (CRC = Cyclic Redundancy Check) on the data read.

**15.** Apparatus (150) of one of the claims 11 to 14, wherein the means (170) for reading redundancy data is adapted for reading redundancy data for which data subsets have been read incorrectly from a location on which information is comprised in the control information.

**16.** Apparatus (150) of one of the claims 11 to 15, wherein the means (175) for combining is adapted for combining the redundancy data and the data according to an XOR operation.

**17.** Apparatus (150) of one of the claim 11 to 16, wherein the means (175) for combining is adapted for combining the redundancy data and the data according to a Reed Solomon code, a convolutional code or a turbo code.

**18.** Method for reading a data set from a storage medium, comprising the steps of:

reading control information from the storage medium, the control information having information on redundancy data on the storage medium;
reading data from the storage medium;
indicating if a subset of data was read incorrectly;
reading redundancy data based on the information on redundancy data in response to the step of indicating; and
combining the data and the redundancy data to obtain the data set.

**19.** Computer program having a program code for performing the method according to claim 18 when the computer program runs on a computer.

**20.** Optical disc drive comprising an apparatus for writing according to one of the claims 1 to 10 or an apparatus for reading according to one of the claims 11 to 17.

**21.** Optical disc drive comprising a firmware according to one of the claims 10 or 19.

FIG 1

FIG 2a

Storage Medium — 155

means for reading control information — 160

means for reading data — 165

means for reading redundancy data — 170

control information

data

redundancy data

indication

information on redundancy data

means for combining — 175

data

redundancy data

data set

150

**FIG 2b**

155 — Storage Medium

160 — means for reading control information

control information

indication

information on redundancy data

165 — means for reading data

data

170 — means for reading redundancy data

redundancy data

175 — means for combining

180 — XOR or Reed Solomon

redundancy data

data

data set

**FIG 3**

# FIG 4

| Bit<br>Byte | 7 | 6 | 5 | 4 | 3 | 2 | 1 | 0 |
|---|---|---|---|---|---|---|---|---|
| 0<br>:<br>3 | Structure Size | | | | | | | |
| 4<br>:<br>7 | Structure Identifier `BTAS` | | | | | | | |
| 8<br>:<br>15 | DSI LSN | | | | | | | |
| 16<br>:<br>23 | FFIT LSN | | | | | | | |
| 24<br>:<br>31 | ARB LSN | | | | | | | |
| 32<br>:<br>39 | Backup DSI LSN | | | | | | | |
| 40<br>:<br>47 | Backup FFIT LSN | | | | | | | |
| 48<br>:<br>55 | Backup ARB LSN | | | | | | | |

# FIG 5

| Bit<br>Byte | 7 | 6 | 5 | 4 | 3 | 2 | 1 | 0 |
|---|---|---|---|---|---|---|---|---|
| 0<br>:<br>3 | FFITH Size (FFITHS) | | | | | | | |
| 4<br>:<br>7 | FFIT Identifier `BFIT' | | | | | | | |
| 8<br>:<br>15 | SecurDisc FFIT Version Number (High, Low) | | | | | | | |
| 16<br>:<br>23 | SecurDisc Copy Protection Recovery field | | | | | | | |
| 24<br>:<br>31 | SecurDisc Pass phrase Verification Checksum (EPVC) | | | | | | | |
| 32<br>:<br>39 | SecurDisc Global Feature Flag Mask | | | | | | | |
| 40<br>:<br>47 | FFITE Chunk Size (FFITECS) | | | | | | | |
| 48<br>:<br>55 | Number of FFITE Chunks (NUMFFITE) | | | | | | | |

# FIG 6

| Bit<br>Byte | 7 | 6 | 5 | 4 | 3 | 2 | 1 | 0 |
|---|---|---|---|---|---|---|---|---|
| 0<br>:<br>7 | | | | LSN of File Fragment | | | | |
| 8<br>:<br>15 | | | | Size of File Fragment in logical sectors | | | | |
| 8 | | | | | CS | PP | CP | |
| 9 | | | | Reserved (SecurDisc Feature Flag Mask) | | | | |
| 10<br>:<br>25 | | | | File Fragment Checksum | | | | |

# FIG 7

| CP Value | Description |
| --- | --- |
| 00b | Copy Protection is not used for this file fragment. |
| 01b | Standard Copy Protection is used for this file fragment. |
| 10b | Copy Protection is used for this file fragment. Special protected output rules apply as specified in the compliance rules for viewer applications. |
| 11b | Reserved |

## FIG 8

| Bit<br>Byte | 7 | 6 | 5 | 4 | 3 | 2 | 1 | 0 |
|---|---|---|---|---|---|---|---|---|
| 0<br>:<br>3 | DSI Size (DSIS) | | | | | | | |
| 4<br>:<br>7 | DSI Identifier 'BDSI' | | | | | | | |
| 8<br>9 | SecurDisc DSI Version Number (High, Low) | | | | | | | |
| 10<br>:<br>25 | Disc Signature RSA Public Key Hash | | | | | | | |
| 26<br>:<br>27 | Number of Redundancy Maps (N) | | | | | | | |
| 28<br>:<br>31 | Reserved | | | | | | | |
| 32<br>:<br>287 | RSA Disc Signature | | | | | | | |
| 288<br>:<br>287+<br>((N+19*<br>28) | Redundancy Information for N+1 Redundancy Maps | | | | | | | |

# FIG 9

| Byte \ Bit | 7 | 6 | 5 | 4 | 3 | 2 | 1 | 0 |
|---|---|---|---|---|---|---|---|---|
| 0 : 3 | Redundancy Level (REDLEVEL) | | | | | | | |
| 4 | Map Type | Reserved | | | | | | |
| 5 | Redundancy Function | | | | | | | |
| 6 7 | Reserved | | | | | | | |
| 8 : 11 | Number of Redundancy Map Entries (NUMRMAPE) | | | | | | | |
| 12 : 19 | Redundancy Map LSN | | | | | | | |
| 20 : 27 | Backup Redundancy Map LSN | | | | | | | |

# FIG 10

| Byte \ Bit | 7 | 6 | 5 | 4 | 3 | 2 | 1 | 0 |
|---|---|---|---|---|---|---|---|---|
| 0<br>:<br>3 | UNIQUE PACKET number | | | | | | | |
| 4<br>:<br>7 | PACKET Number of MAPPED PACKET #1 | | | | | | | |
| 8<br>:<br>7+ (REDLEVEL-2)*4 | PACKET numbers of<br>MAPPED PACKETS #2 through #REDLEVEL-1 | | | | | | | |
| 8+ (REDLEVEL-2)*4<br>11+ (REDLEVEL-2)*4 | PACKET Number of MAPPED PACKET #REDLEVEL | | | | | | | |